# EUROPEAN PATENT APPLICATION

(11) **EP 2 204 335 A1**
(43) Date of publication of application: **07.07.2010**
(21) Application number: 09016054.0
(22) Date of filing: 28.12.2009
(51) Int. Cl.: B65D 75/58

(54) **Flexible package having multiple opening feature**

(30) Priority: 31.12.2008 US 347401
(71) Applicant: Kraft Foods Global Brands LLC, Northfield, IL 60093 (US)
(72) Inventor: Leathersich, Jean Elisabeth, East Hanover New Jersey 07936 (US); Gruskin, Glenn Stanley, Nanuet, New York 10954 (US); Sierra-Gomez, Gladys O, Woodbridge, New Jersey 07095 (US)
(74) Representative: Bucks, Teresa Anne

(57) **Abstract**

A flexible package (10) with a multiple-opening feature is suitable for retail sale of food products and is comprised of a film material. The flexible package (10) includes two areas of weakness (24,34) defining two removable top portions (20,30). Removal of the first top portion (20) exposes an opening in the flexible package allowing egress of the product through a first opening. Removal of the second top portion (30) exposes a second opening in the flexible package, which, by one approach, is larger than the first opening and thereby permits increased access to the food product.

## Description

### Technical Field

This invention relates generally to packaging, and more particularly to a disposable packaging comprising a pouch having a multiple opening feature.

### Background

Flexible film packages are well known in the art and typically comprise disposable pouches commercially produced on high-speed form-fill-seal machines from rolls of plastic film material. The flexible film packages have cavities within which pluralities of contents, such as food products, are stored. Consumers typically open these packages by tearing the plastic film material to access the contents. Moreover, consumers often have varied behaviors when consuming contents from such a package. While some prefer to controllably pour the contents out of the package, others desire to reach into the package to manually remove the contents. A package having a multiple opening feature allows the consumer to create an opening in the package that best suits the individual consumer's preferred behavior.

Numerous opening mechanisms for flexible packages are well known in the art. By one approach, flexible packages are opened by simply ripping off the sealed top portion of the package. The package may be notched to facilitate the tearing of the film. This approach gives the consumer little control over the size of the package's opening. Because the consumer must exert a large amount of force to tear the film material, it is difficult to control the tear so that it extends across only a portion of the package.

In another approach, flexible packages have zipper seals, such as press-to-close or slider-facilitated. Zippers allow the consumer to vary the size of the package's opening between fully closed and fully open. The consumer may open only a portion of the zipper seal to control the width of the package opening. However, the zipper seal is easily separated once partially opened. A small force parallel to the zipper causes the zipper to separate. As the consumer accesses the contents of the package or pours the contents of the package out, the seal is often opened further. Thus, the desired opening size is not maintained.

In yet another approach, flexible packages have a narrowed opening designed to permit controlled pouring. This may be done through use of an integrated spout. In another approach, some flexible packages include a feature to stop the consumer from being able to tear off the entire top of the package. Such an opening may also be facilitated by using a tear line extending across only a portion of the package. In all of the above approaches, the consumer may only controllably create a single-width opening. This configuration, similar to those packages where the entire top seal is separated, does not allow the consumer to select an opening size that best suits the consumer's desired use of the package.

### Summary

The package described herein comprises a flexible pouch having two areas of weakness defining two removable top portions. Removal of the first top portion exposes an opening in the pouch allowing egress of the product contained therein. Removal of the second top portion exposes yet another opening in the pouch allowing egress of the product. In one embodiment, the first opening is smaller than the second opening to facilitate different manners of dispensing the food product. Further, in one illustrative example, the flexible pouch is a hand held pouch that can be comfortably and easily controlled with one hand.

To commercially produce the flexible package having a multiple opening feature, high-speed form-fill-seal equipment having a vertical or horizontal configuration may be employed. In one embodiment, the packages are formed out of film material in an in-line operation such that areas of weakness are formed at the time the packages are sealed.

### Brief Description of the Drawings

The above needs are at least partially met through provision of the flexible package with a multiple opening feature described in the following detailed description, particularly when studied in conjunction with the drawings, wherein:
FIG. 1 comprises a front elevational view of a flexible package as configured in accordance with various embodiments of the invention;
FIG. 2 comprises a perspective view of the flexible package of FIG. 1 in an open configuration;
FIG. 3 comprises a perspective view of the flexible package of FIG. 2 dispensing its contents;
FIG. 4 comprises a perspective view of the flexible package of FIG. 1 in a second open configuration.
FIG. 5 comprises a rear elevational view of another of the flexible pouch of FIG. 1;
FIG. 6 comprises a front elevational view of another embodiment of a flexible package configured in accordance with various embodiments of the invention;
FIG. 7 comprises a front elevational view of another embodiment of a flexible package configured in accordance with various embodiments of the invention;
FIG. 8 comprises a front elevational view of another embodiment of a flexible package configured in accordance with various embodiments of the invention; and
FIG. 9 comprises a partial perspective view illustrating apparatus as configured in accordance with various embodiments of the invention.

Skilled artisans will appreciate that elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present invention. Also, common but well-understood elements that are useful or necessary in a commercially feasible embodiment are often not depicted in order to facilitate a less obstructed view of these various embodiments of the present invention. It will further be appreciated that certain actions and/or steps may be described or depicted in a particular order of occurrence while those skilled in the art will understand that such specificity with respect to sequence is not actually required. It will also be understood that the terms and expressions used herein have the ordinary technical meaning as is accorded to such terms and expressions by persons skilled in the technical field as set forth above except where different specific meanings have otherwise been set forth herein.

### Detailed Description

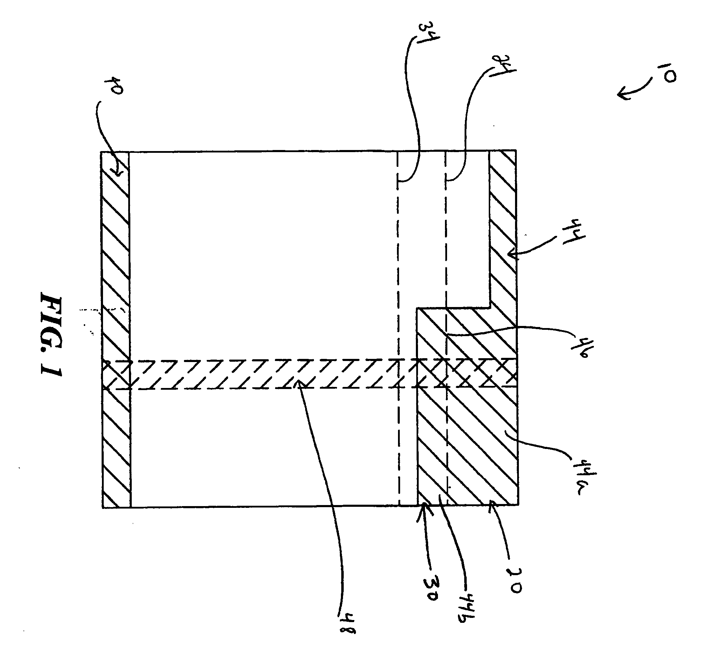

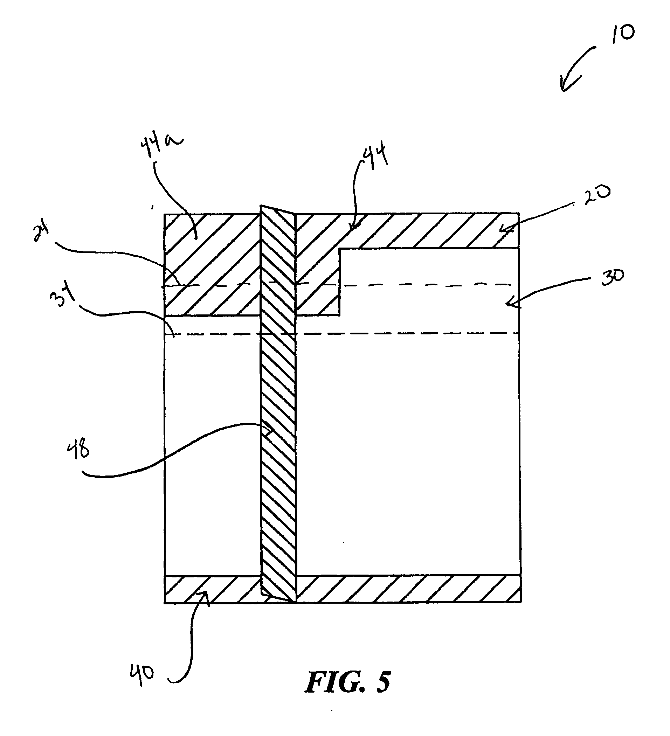

Generally speaking, pursuant to these various embodiments, a flexible package having a multiple opening feature is illustrated in Figs. 1-8. The flexible pouch 10, as shown in Figs. 1-5, may be used for packaging, for example, particulate food products 12 such as nuts, candy, and cereal. The flexible pouch has a first removable top portion 20 that is in part defined by a first area of weakness 24. The first area of weakness facilitates removal of the first removable top portion 20. The flexible pouch additionally has a second removable top portion 30 that is in part defined by a second area of weakness 34. The second area of weakness 34 facilitates removal of the second top portion 30. If the first removable top portion 20 has not already been removed, removal of the second removable top portion 30 will also remove the first removable top portion 20. The flexible pouch 10 may be comprised of a flexible film material that is formed using high-speed form-fill-seal equipment. The flexible pouch may have a variety of seal, folds, and other features as determined by a variety of considerations, such as the products stored in the pouch, consumer use, and the method of manufacturing the pouch, to note but a few.

In one illustrative embodiment, as depicted in Fig. 1, the flexible pouch 10 has a bottom seal 40, a top seal 44, and a fin seal 48. A portion 46 of the top seal 44 overlaps the first area of weakness 24. Seals 40, 44, 48 and similar seals may be created by reciprocating heat sealing bars or other suitable sealing apparatus and well known to those skilled in the art. While a variety of flexible pouch configurations are possible, the flexible pouch 10 of Fig. 1 lacks side seals, which may accommodate the handheld aspect of the flexible pouch such that the user may more conveniently and comfortably grasp the package at the side edges with one hand.

The areas of weakness 24, 34 facilitate removing respective removable top portions 20, 30 from flexible pouch 10. More particularly, the areas of weakness 24, 34 may assist the user in initiating and directing the tear that removes the top portions 20, 30. Further, the areas of weakness 24, 34 also may assist the user in guiding the tear through the fin seal 48 or other potentially difficult areas. The areas of weakness 24, 34 may be created by laser scoring, mechanically, such as by creating perforations, or other similar techniques. In one illustrative embodiment, the areas of weakness 24, 34 extend across the entire width of flexible pouch 10. The positioning of the areas of weakness 24, 34 may be determined by a number of factors such as overall size of the package, the food product stored therein, and the desire to ensure sufficient distance between the two areas of weakness 24, 34.

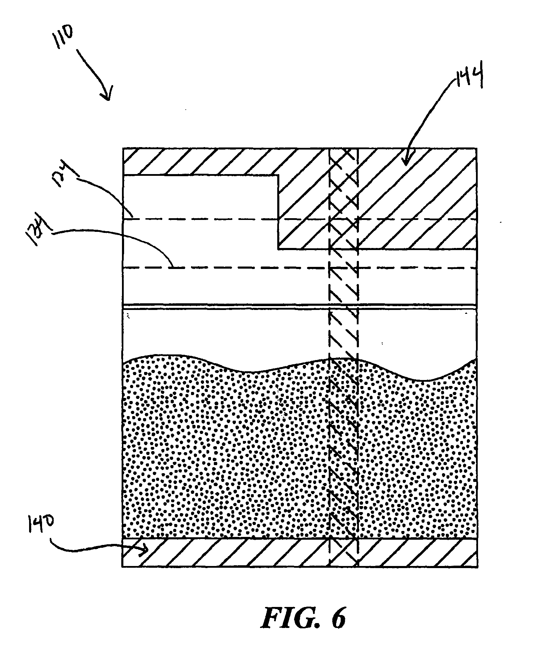

Depending on the contents 12 of the flexible pouch 10, it may be desirable for the package to have a hermetic seal. The hermetic seal may be created by the top seal 44 or another seal. Turning now to Fig. 6, there is illustrated another embodiment of a flexible pouch 100. For convenience, features of the alterative embodiments illustrated in the following figures that correspond to features already discussed with respect to Figs. 1-5 are identified using the same reference numeral in combination with a numerical prefix such that flexible pouch '10' becomes flexible pouch '110.' The flexible pouch 110, like pouch 10, includes a top seal 144 and a bottom seal 140. Flexible pouch 110 also includes a resealable seal 160 disposed between the area of weakness 134 and the contents of the pouch 12. The resealable seal 160 may be, for example, a press-to-close zipper or a resealable adhesive seal. Such an embodiment functions similarly to the previously discussed embodiments, except after removable of either removable top portion 120 or removable top portion 130, the package may be resealed. By one approach, the contents 12 may retain freshness well after the first and second removable top portions 20, 30 have been removed from the pouch 110 by permitting the pouch 110 to be resealed. Further, by having a resealable seal 160 disposed between the area of weakness 234 and the contents 12, the resealable seal 160 may provide the hermetic seal to retain the freshness of the contents 12.

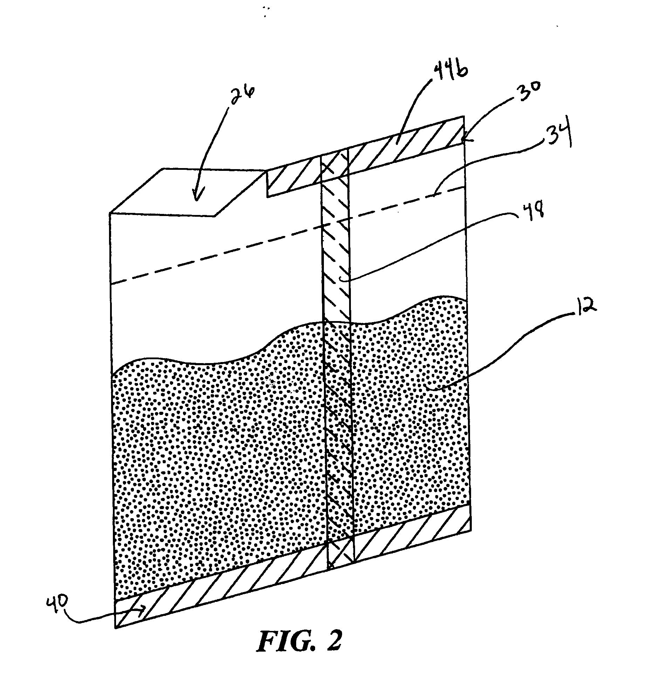

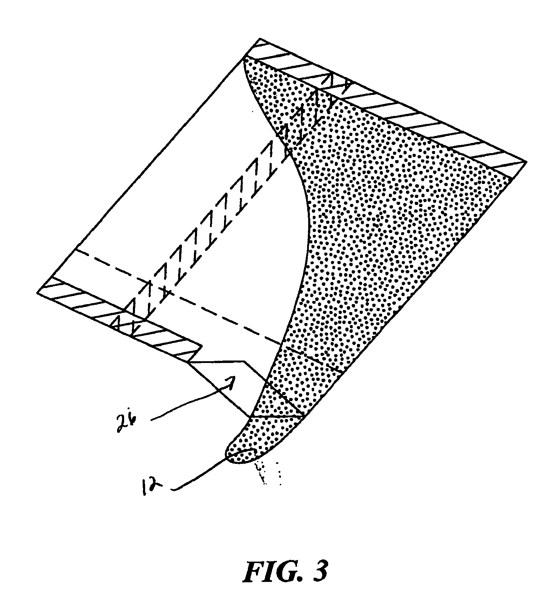

The consumer may accesses the contents of the flexible pouch 10 by removing one or both removable top portions 20, 30. Area of weakness 24 facilitates the removal of the first top portion 20 ensuring that the removable top portion 20 separates from the flexible pouch 10 in a controlled manner along a predetermined path. Fig. 2 depicts flexible pouch 10 after removable first top portion 20 of Fig. 1 has been removed. As illustrated in Fig. 2, an aperture 26 is exposed by removal of removable first top portion 20 (Fig. 1). Aperture 26 permits dispensing contents 12 from the flexible pouch by pouring as depicted in Fig. 3.

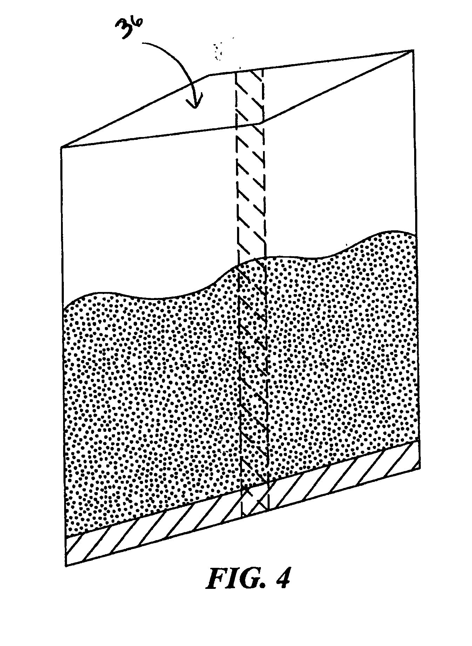

Similar to area of weakness 24, area weakness 34 facilitates the removal of the second top portion 30 ensuring that the removable top portion 30 separates from the flexible pouch 10 in a controlled manner along a predetermined path. Fig. 4 depicts flexible pouch 10 after removable second top portion 20 of Fig. 1 and Fig. 2 has been removed. An aperture 36 is exposed by removal of removable second top portion 30 of Fig. 1. Aperture 36 permits dispensing contents 12 from the flexible by pouring or by a consumer reaching into the flexible pouch to remove food contents 12, such as by hand

To create two differently sized apertures 26, 36, a number of configurations are contemplated. By one approach illustrated in Fig. 1, the top seal 44 has an asymmetrical configuration such that a portion of the top seal 44 extends below a portion of the first area of weakness 24. In this configuration, the top seal has an upper portion 44a above the first area of weakness 26 and a lower portion 44b positioned below the first area of weakness 26 but terminating above the second area of weakness 36. Other configurations discussed below having top seals 44 with similar but different configurations. It is also contemplated that such differently sized apertures or openings 26, 36 could also be created by employing nonlinear areas of weakness or non-parallel areas of weakness.

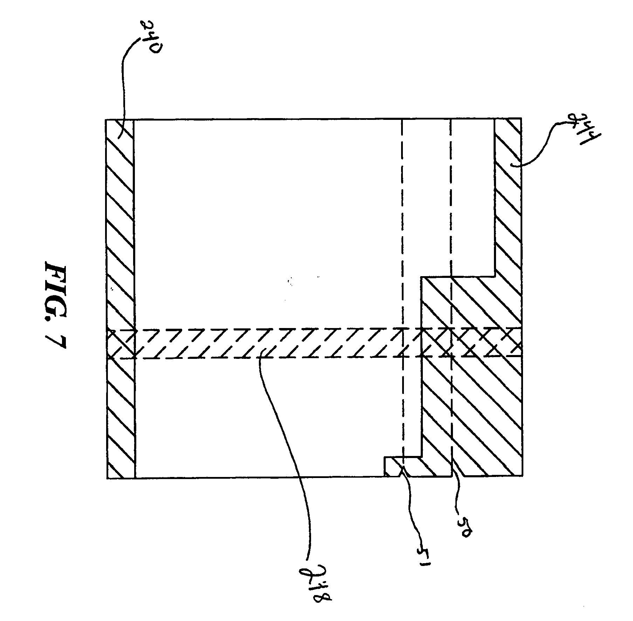

Turning now to Fig. 7, another embodiment of a flexible pouch 210 is illustrating having a top seal 244, a bottom seal 240, a fin seal 248, and areas of weakness 224 and 234. In addition, flexible pouch 210 may also include a tear initiation feature 50, 51 at the edges of the areas of weakness 224 and 234 such as that shown in Fig. 7. The tear initiation feature 50, 51 may be, for example, v-notches or slit-notches. The tear initiation features 50, 51 are aligned such that they initiate a tear along the line of the areas of weakness 224 and 234. Such features further aid in the ease and controlled opening of the package.

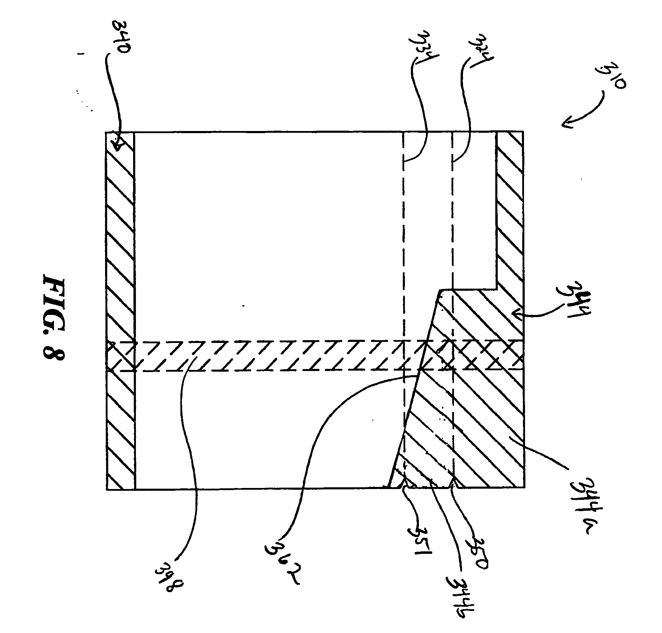

Referring now to Fig. 8, another embodiment of a flexible pouch 310, similar to pouch 210 is illustrated. In addition to the tear initiation features 350, 351, flexible pouch 310 also has a top seal 344 that slants downward toward and past the lower tear initiation feature 351. Thus, the tear initiation feature 351 does not interfere with the hermetic seal of the flexible pouch 210 and, further, a lower edge 362 of the top seal 344 may guide the contents 12 of the flexible pouch 310 to the aperture 26 created with the first top portion 20 is removed.

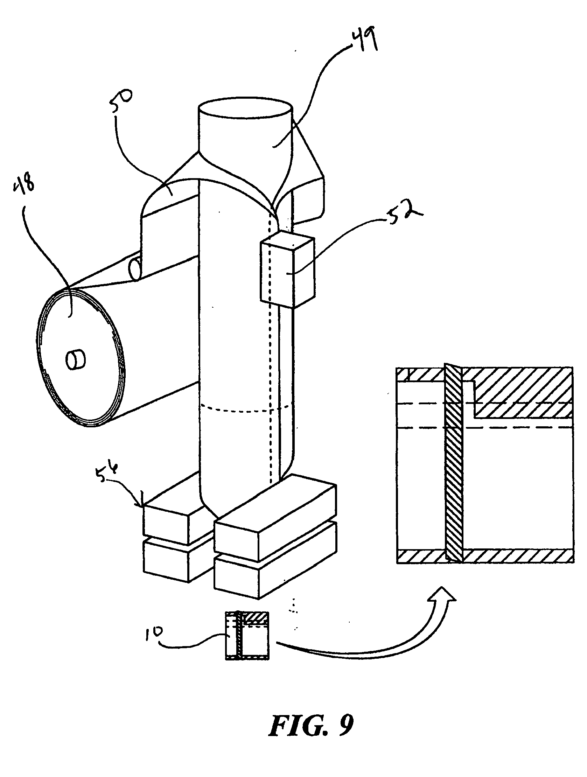

A variety of manufacturing methods are available to commercially produce the multiple-opening flexible pouches and one illustrative example will be discussed herein. The flexible pouches may be made in a high-speed form-fill-seal (FFS) operation that produces up to 800 packages per minute. By one approach, the FFS operation may be on a vertical FFS machine, as illustrated in Fig. 9. The areas of weakness may also be created in variety of ways, including laser-scoring or perforation, in-line or by an add-on module to the FFS operation.

In one illustrative embodiment shown in Fig. 9, the flexible pouches are made in a vertical FFS or bagging line. A series of flexible pouches is formed from a roll of film 48, such that the front and back panels of the film material define a cavity. By one approach, a web of the rolled film material is fed over a folding shoulder 50 such as a forming collar and mandrel to provide it with a tubular shape. Opposite longitudinal edges of the film are brought together around the fill tube 49. The longitudinal edges are sealed, such as by a seal tool 52 to form a fin seal, or overlapped to form a lap seal. A bottom seal for the pouch is also formed by the reciprocating sealing tool 56, which may include a pair of reciprocating sealing bars. The reciprocating sealing bars are heat sealing bars maintained at a desired temperature to apply heat and pressure to the front and rear walls. Further, the heat seal bars are brought together on opposite sides of the tubular web so that heat is conductively transferred to the film from both sides while pressure is applied. The sealing bars may be used in an intermittent or continuous operation. In an intermittent operation, the film is stopped while the sealing bars engage the film. In a continuous operation, the sealing bars may move vertically at the machine speed as they engage the film. In addition, sealing tool 56 separates the bottom pouch from the upper pouch. Once the operation is complete and the upper pouch has been filled with food product, the upper pouch advances downward and becomes the bottom pouch that to which curved semi-rigid strips are attached.

After a bottom seal is formed in the flexible pouch, the partially formed flexible pouch is then filled with food product, which is introduced into the pouch via the fill tube 49. In one embodiment, an area of weakness is formed in the flexible pouches to define a removable top portion. By one approach, a notch, score line, or other feature to facilitate removal of the top portion of the package may then be formed near the top of the pouch. A hermetic seal may also be created in the flexible pouch. The formed, filled, and sealed pouch then advances downward as the next pouch is formed, filled, and sealed, resulting in a chain or connected series of filled, sealed pouches advancing in the machine direction intermittently or continuously. The flexible pouches are then separated from one another, such as, for example, by a reciprocating knife.

There are a variety of alternative steps to those described in this vertical FFS operation. Also, high speed techniques may be employed instead of application of heat and pressure by heat seal bars as described above. For example, RF energy, ultrasonic energy or other techniques may be employed.

The film material or substrate of the flexible pouch may be formed as a polymeric sheet of various plastic polymers, copolymers, co-extrusions and/or laminations. Further, the film material may be a monolayer polymeric film or a multilayer laminate comprising an outer layer of durable material and one or more inner barrier layers and sealant layers. The multilayer combination may be comprised of polyolefin such as polyethylene (high, medium, low, linear low, and/or ultra low density polymers including metallocene), polypropylene (oriented and/or biaxially oriented); polybutylene; ethylene vinyl acetate (EVA); polyamides (oriented and/or biaxially oriented) such as nylon; polyethylene terephthalate (oriented and/or biaxially oriented); polyvinyl chloride; ethylene vinyl alcohol (EVOH); polyvinylidene chloride (PVDC); polyvinyl alcohol (PVOH); polystyrene; or combinations thereof. In addition, adhesive tie layers may also be used.

The packaged food product of the present application may comprise a laser score line in the first and/or the second area of weakness.

The first aperture and the second aperture of the packaged food product have a width, wherein the width of the second aperture may be greater than the width of the first aperture. The widths of the first and second aperture may correspond to a pre-determined rate at which the food product exits the package during dispensing, or the width of the second aperture and the width of the packaged food product may be substantially the same, or the widths of the first and second aperture have a pre-determined relation to the size of the food product.

In the packaging product of the present application, each area of weakness may comprise a notch positioned adjacent to the area of weakness and an edge portion and/or a resealable seal disposed between the second area of weakness and the food product.

In the method of mass producing a packaged food product of the present application, the laser scoring may be oriented parallel or perpendicularly to the equipment direction. The sealing of the poaches may be provided by heat sealing.

Those skilled in the art will recognize that a wide variety of modifications, alterations, and combinations can be made with respect to the above described embodiments without departing from the spirit and scope of the invention, and that such modifications, alterations, and combinations are to be viewed as being within the ambit of the inventive concept.

## Claims

1. A packaged food product for commercial mass production comprising:
a flexible pouch having a fin seal, a top seal at least partially extending along a width of the flexible pouch, and a bottom seal;
a food product disposed within the flexible pouch;
the flexible pouch including:
a first removable top portion;
a first area of weakness extending across the width of the flexible pouch to facilitate removal of the first top portion;
a second removable top portion;
a second area of weakness extending across the width of the flexible pouch to facilitate removal of the second top portion;
wherein the first removable top portion is configured and arranged such that upon removal of the first removable top portion, a first aperture extending partially across the flexible pouch permits a user to pourably dispense the food product; and
wherein the second removable top portion is configured and arranged such that upon removal of the second removable top portion, a second aperture extending partially across the flexible pouch permits dispensing the food product.

2. The packaged food product of claim 1 wherein the first area of weakness comprises at least a first score line.

3. The packaged food product of claim 1 or claim 2
wherein the second area of weakness comprises at least a second score line.

4. The packaged food product of any one of the preceding claims further comprising a notch, the notch positioned adjacent the first area of weakness and an edge of the food package.

5. The packaged food product of any one of the preceding claims further comprising a notch, the notch positioned adjacent the second area of weakness and an edge of the food package.

6. The packaged food product of any one of the preceding claims wherein the packaged food product is capable of being formed in-line with a form-fill-seal machine.

7. The packaged food product of any one of the preceding claims wherein the first area of weakness comprises at least one perforated line and the second area of weakness comprises at least one perforated line.

8. A packaging product comprising:
a flexible pouch defining an interior space, the flexible pouch comprising:
a fin seal;
a bottom seal;
a top seal located along a top edge portion of the flexible pouch; and
a first and a second area of weakness extending from the first edge portion to the second edge portion substantially parallel to the top edge portion, wherein the first area of weakness partially overlaps the top seal disposed along the top edge portion and wherein the second area of weakness is a vertical distance from the seal along the top edge portion.

9. The packaging product of claim 8 wherein a food product is disposed within the flexible pouch in the interior space below the second area of weakness.

10. The packaging product of claim 8 or claim 9 wherein the areas of weakness comprise at least one laser score line.

11. The packaging product of any one of claims 8 to 10 wherein the packaging product is capable of being formed in-line with a form-fill-seal machine.

12. The packaging product of any one of claims 8 to 11 wherein the packaging product is made of at least one of polyolefin, polypropylene, polybutylene, ethylene vinyl acetate, polyamides, polyethylene terephthalate, polyvinyl chloride, ethylene vinyl alcohol, polyvinylidene chloride, polyvinyl alcohol, and polystyrene.

13. A method for mass producing a packaged food product in high-speed form-fill-seal equipment comprising:
forming a series of pouches having a bottom seal and a fin seal, each of the pouches having a cavity formed therein;
filling the cavities of the pouches;
sealing the pouches forming a top seal along a width of the pouches;
forming a first removable top portion on each pouch defined by a first area of weakness extending across the width of the pouch configured such that upon removal of the first removable top portion a first aperture in the pouch having width less than the pouch is exposed;
forming a second removable top portion on each pouch defined by a second area of weakness extending across the width of the pouch configured such that upon removal of the second removable top portion a second aperture in the pouch having width less than the pouch is exposed; and
separating the pouches from one another.

14. The method of claim 13 wherein the forming the areas of weakness comprises laser scoring the packaged food product.

15. An apparatus for mass producing a packaged food product in high-speed form-fill-seal equipment comprising:
means for forming a series of pouches with front panels, back panels, and widths;
means for filling the cavities of the pouches;
means for sealing the pouches;
means for forming a first removable top portion on each pouch defined by a first area of weakness extending across the width of the pouch configured such that upon removal of the first removable top portion a first aperture in the pouch having width less than the pouch is exposed;
means for forming a second removable top portion on each pouch defined by a second area of weakness extending across the width of the pouch configured such that upon removal of the second removable top portion a second aperture in the pouch having width less than the pouch is exposed; and
means for separating the pouches from one another.
